# EUROPEAN PATENT SPECIFICATION

(11) **EP 3 108 552 B1**
(45) Date of publication and mention of the grant of the patent: **05.05.2021**
(21) Application number: 14705196.5
(22) Date of filing: 19.02.2014
(51) Int. Cl.: H02G 15/115

(54) **METHOD OF ASSEMBLING A HANG-OFF DEVICE WITH A CABLE, A HANG-OFF DEVICE AND A HANG-OFF ARRANGEMENT**
VERFAHREN ZUR MONTAGE EINER HERUNTERHÄNGENDEN VORRICHTUNG MIT EINEM KABEL, HERUNTERHÄNGENDE VORRICHTUNG UND HERUNTERHÄNGENDE ANORDNUNG
PROCÉDÉ CONSISTANT À ASSEMBLER UN DISPOSITIF DE SUSPENSION AVEC UN CÂBLE, DISPOSITIF DE SUSPENSION ET AGENCEMENT DE SUSPENSION

(43) Date of publication of application: 28.12.2016
(73) Proprietor: NKT HV Cables AB, 371 60 Lyckeby (SE)
(72) Inventor: EKHOLM, Henrik, S-372 74 Listerby (SE); NORDÉ, Niklas, S-371 46 Karlskrona (SE)
(74) Representative: Kransell & Wennborg KB
(86) International application number: PCT/EP2014/053228
(87) International publication number: WO 2015/124179

(56) References cited:
- EP-A1- 2 696 123
- EP-A2- 1 553 675
- EP-A2- 2 214 279
- GB-A- 177 304
- GB-A- 390 897
- US-A- 4 495 379
- US-B1- 7 411 132

## Description

### TECHNICAL FIELD

The present disclosure generally relates to high voltage cable equipment. In particular it relates to a method of assembling a hang-off device with an armoured power cable, to a hang-off device and to a hang-off device arrangement.

### BACKGROUND

Subsea cables are often brought from sea onto an offshore platform such as an oil platform or a wind turbine via an I-tube or a J-tube for example. Such subsea cables typically have one or more layers of metal wires below its external sheath, forming an armour to protect the conductive core of the subsea cable from mechanical stress. The armour may normally also be utilised to fasten the subsea cable to the platform by means of a hang-off device that is attachable to the platform at the termination of the I-tube or J-tube. Cables can also be fixated to an installation by means of a hang-off device without leading the cable through a tube, for example when attaching a cable to a vessel. In order to hang off an armoured cable, the armour of the cable is exposed, cut and bent radially outwardly in level with the hang-off device. The hang-off device typically has a clamp which is arranged to clamp the radially outwardly bent armour to fixate the cable to the platform or structure.

Another type of hang-off device utilises a compound which is injected into the hang-off body and which solidifies therein to thereby mould the subsea cable into the hang-off device. Also in this case the armour is cut and bent radially outwardly, and the outwardly bent armour wires are fixated inside the hang-off device by the solidified compound. These hang-off devices generally provide a higher mechanical strength than those utilising clamping techniques, and thus provide a more secure attachment of a subsea cable to an offshore platform. Although such hang-off devices are very safe, it would still be desirable to achieve cable attachment to an offshore platform even safer than existing solutions utilising a compound to mould the cable into the hang-off device. Relevant documents are EP1553675A2, US4495379A, EP2696123A1 and the brochure "UK POWER NETWORK 11Kv JOINTING MANUAL".

### SUMMARY

An object of the present disclosure is thus to provide a hang-off device and a method of assembling a hang-off device, which solves or at least mitigates the problems of existing solutions.

Hence, according to a first aspect of the present disclosure there is provided a method of assembling a hang-off device with an armoured power cable, wherein the method comprises:
a) peeling a portion of the armoured power cable to expose armour wires of the armoured power cable,
b) cutting the armour wires along the periphery of the armoured power cable thus obtaining a first set of cut armour wires and a second set of armour wires, each cut armour wire of the first set of cut armour wires facing a corresponding cut armour wire of the second set of armour wires,
c) bending the first set of cut armour wires and the second set of armour wires radially outwards,
d) bringing together and assembling a first part of the hang-off device with a second part of the hang-off device around the armoured power cable thus forming the hang-off device, the first part and the second part being brought together such that the first set of cut armour wires and the second set of armour wires are arranged within the hang-off device, wherein a mould chamber is formed around the first set of cut armour wires and the second set of armour wires,
e) injecting a compound into the mould chamber to fixate the hang-off device to the outwardly bent first set of cut armour wires and second set of armour wires, and
electrically connecting the first set of cut armour wires to the second set of cut armour wires after step c), wherein the step of electrically connecting is obtained by providing an electrically conducting ring between the first set of cut armour wires and the second set of cut armour wires which have been bent radially outwards in step c), and arranging the first set of cut armour wires and the second set of cut armour wires in electrical connection with the electrically conducting ring prior to step e), and welding the first set of cut armour wires and the second set of cut armour wires to the electrically conducting ring, or wherein the step of electrically connecting comprises arranging the first set of cut armour wires to contact the inner walls of the mould chamber to obtain electrical connection between the first set of cut armour wires and the second set of cut armour wires, or wherein the step of electrically connecting comprises injecting an electrically conducting compound in step e).

An effect which may be obtainable thereby is that the armour wires obtain the same electric potential along the entire subsea cable i.e. both the portion of the subsea cable extending above the hang-off device, and the portion extending below the hang-off device when the hang-off device has been mounted on and grounded to an offshore platform or other structure.

One embodiment comprises repeating steps b)-c) for a plurality of layers of armour wires of the armoured power cable prior to step e), and providing an electrically conducting ring between the first set of cut armour wires and the second set of cut armour wires of each layer of armour wires.

One embodiment comprises welding the first set of cut armour wires and the second set of cut armour wires to the inner walls of the mould chamber.

According to one embodiment each armour wire of the first set of cut armour wires is electrically connected to an armour wire of the second set of cut armour wires.

According to a second aspect of the present disclosure there is provided a hang-off device for assembly with an armoured power cable having a first set of cut armour wires and a second set of cut armour wires, wherein the hang-off device comprises: a first part and a second part adapted to be assembled together, each of the first part and the second part being arranged to receive an armoured power cable, the first part and the second part defining a mould chamber for moulding a first set of cut armour wires and a second set of cut armour wires to the hang-off device, and electrically conducting means arranged to provide an electrical connection between a first set of cut armour wires and a second set of cut armour wires when arranged in the mould chamber, wherein the electrically conducting means is an electrically conducting compound for moulding a first set of cut armour wires and a second set of armour wires into the hang-off device, or wherein the electrically conducting means is an electrically conducting ring arranged to be mounted between a first set of cut armour wires and a second set of cut armour wires within the mould chamber, or wherein the electrically conducting means is the inner walls of the mould chamber.

According to one embodiment each of the first part and the second part comprises a through-opening extending from an external surface into the mould chamber.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any steps of the method presented herein need not necessarily be performed in the described order, unless explicitly stated so.

### BRIEF DESCRIPTION OF THE DRAWINGS

The specific embodiments of the inventive concept will now be described, by way of example, with reference to the accompanying drawings, in which:
Fig. 1 schematically depicts a perspective view of an example of a hang-off arrangement comprising a hang-off device and an armoured power cable;
Fig. 2 illustrates the hang-off arrangement in Fig. 1 with part of the hang-off device being cut away to expose the armoured power cable extending through the hang-off device;
Fig. 3 shows a hang-off arrangement with its interior exposed and with an outer armour layer partially cut away to expose an inner armour layer.
Fig. 4 is a flow chart showing a method of assembling a hang-off device and an armoured power cable to form a hang-off arrangement; and
Fig. 5 schematically illustrates a side view of the hang-off arrangement in Fig. 1 attached to an offshore platform.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

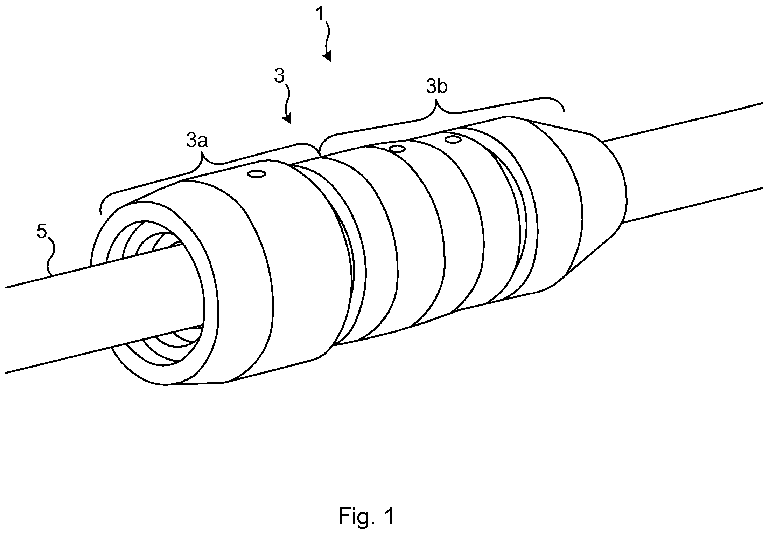

Fig. 1 shows an example of a hang-off arrangement 1 comprising a hang-off device 3 and an armoured power cable 5 arranged in the hang-off device 3. The hang-off device 3 comprises a first part 3a and a second part 3b which are adapted to be assembled together. The first part 3a and the second part 3b may for example be mounted together by means of corresponding threaded portions, or any other suitable method for assembling two structures adapted to receive a cable and which when assembled extend along a common axis defined by the cable extending therein.

The first part 3a and the second part 3b are both arranged to receive the armoured power cable 5. Both the first part 3a and the second part 3b hence have a central through-opening through which an armoured power cable can extend. The central through-openings are hence aligned when the first part 3a and the second part 3b are arranged around the armoured power cable 5.

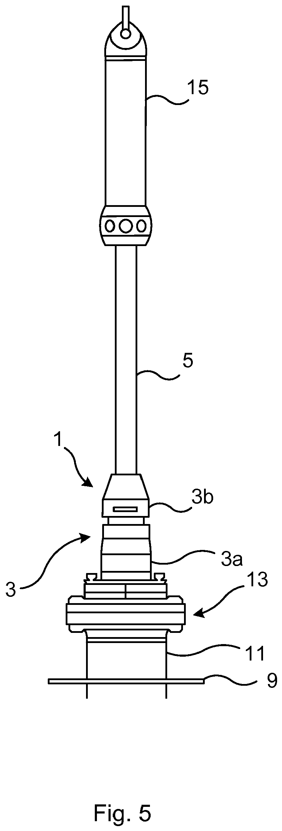

The first part 3a is arranged to be mounted to an offshore platform, e.g. to a flange on a platform. The second part 3b extends on top of the first part 3a when the hang-off device 3 has been installed on an offshore platform, as shown in Fig. 5.

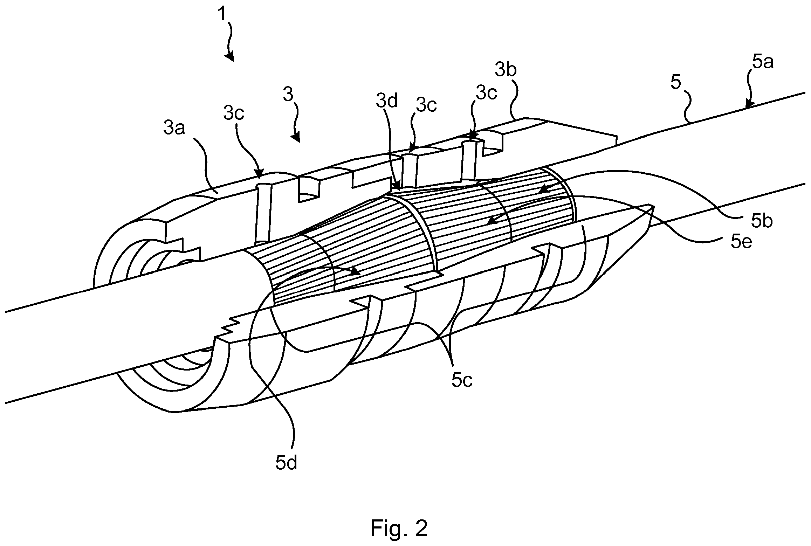

Fig. 2 depicts a perspective view of the hang-off arrangement 1 in Fig. 1, with part of the wall of the hang-off device 3 cut away to expose the interior of the hang-off arrangement 1. The first part 3a and the second part 3b are hence in an assembled state to form the hang-off device 3, and the armoured power cable 5 is arranged in, and extending through the first part 3a and the second part 3b. The hang-off device 3 has through-openings 3c extending from an external surface of the hang-off device 3 into its hollow interior. The hollow interior of the hang-off device 3 defines a mould chamber 3d which is slightly larger than the diameter of the armoured power cable 5 which it is designed to receive. The mould chamber 3d is thus formed by the hollow interiors of the first part 3a and the second part 3b when the first part 3a and the second part 3b have been assembled. A through-opening 3c extends through the first part 3a, i.e. from its external surface into the mould chamber 3d. Furthermore, a through-opening 3c extends through the second part 3b, i.e. from its external surface into the mould chamber 3d. The through-openings 3c can be utilised when injecting a compound into the mould chamber 3d to mould the armoured power cable 5 into the hang-off device 3.

The armoured power cable 5 has an external sheath 5a covering one or more layers of armour wires 5b. The armoured power cable 5 has a portion 5c where the external sheath 5a has been peeled off around the entire periphery to expose the armour wires 5b. This portion 5c is arranged within the hang-off device 3. In particular, the portion 5c has such a length in the axial direction that the mouths of the through-openings 3c open to the exposed armoured wires 5b. This ensures that the compound injected can be distributed along the entire length of the peeled portion 5c.

The armour wires 5b have been cut along the periphery of the armoured power cable 5 in the peeled portion 5c. Each armour wire 5b hence obtains a discontinuity in the axial direction along the armour power cable 5. A first set of cut armour wires 5d and a second set of cut armour wires 5e are hence created, which are separated by means of the discontinuity resulting from cutting the armour wires 5b. The armour wires 5b may thereby be bent radially outwardly, as shown in Fig. 2. The hang-off device 3 will thus be able to fixate the armoured power cable 5 with higher mechanical strength than would otherwise be possible, when the compound has been injected into the mould chamber 3d and solidified.

By means of the hang-off device 3 and its variations presented herein, the first set of cut armour wires 5d and the second set of cut armour wires 5e are electrically connected inside the mould chamber 3d by means of an electrically conducting means. Each variation of hang-off device 3 therefore comprises one or more electrically conducting means, which is/are arranged to electrically connect the first set of cut armour wires 5d with the second set of cut armour wires 5e inside the mould chamber 3d.

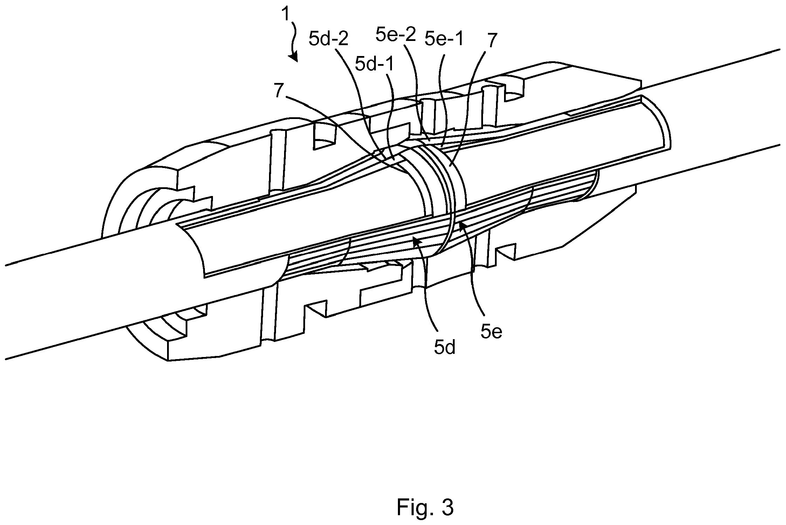

Referring to Fig. 3, a first example of an electrically conducting means 7 is shown. The exemplified electrically conducting means 7 is an electrically conducting ring. The electrically conducting ring is made of an electrically conducting material such as a metal, e.g. steel. The electrically conducting ring is adapted to be provided around the armoured power cable in the section between the first set of cut armour wires 5d and the second set of cut armour wires 5e when these sets of armoured wire have been bent radially outwardly. The first set of cut armour wires 5d and the second set of cut armour wires 5e are bent inwardly after the electrically conducting ring has been placed in the section to obtain a mechanical connection with the electrically conducting ring. The first set of cut armour wires 5d and the second set of cut armour wires 5e are thereby set in electrical connection with each other via the electrically conducting ring. Furthermore, each wire of the first set of cut armour wires 5d and each wire of the second set of cut armour wires 5e may be welded to the electrically conducting ring so that the electrical connection is maintained.

For armoured power cables comprising a plurality of layers of armour wires, i.e. two or more layers, each layer may be cut according to the procedure described above, wherein an electrically conducting ring may be arranged around the armoured power cable for each layer. A plurality of electrically conducting rings may thus be arranged concentrically in the section between first set of cut armour wires and second set of cut armour wires. For each layer, the first set of cut armour wires and the second set of cut armour wires of that layer may be welded to the electrically conducting ring. An example showing an armoured power cable having two layers of armouring is depicted in Fig. 3. This example thus has two sets of first set of cut armour wires 5d, denoted 5d-1 and 5d-2, and two sets of second set of cut armour wires 5e, denoted 5e-1 and 5e-2, one for each layer of armouring.

Any structure able to provide an electrical connection of each wire of the first set of cut armour wires with a wire of the second set of cut armour wires could be used as an electrically conducting means, i.e. any electrically conducting joint member. As an alternative to the electrically conducting ring, the first set of cut armour wires and the second set of cut armour wires could be welded to the inner walls, i.e. the inner surface, of the mould chamber 3d provided that it is electrically conducting, e.g. of metal such as steel.

According to another variation, the electrically conducting means could be in the form of an electrically conducting compound used for moulding the first set of cut armour wires 5d and the second set of cut armour wires 5e into the mould chamber 3d.

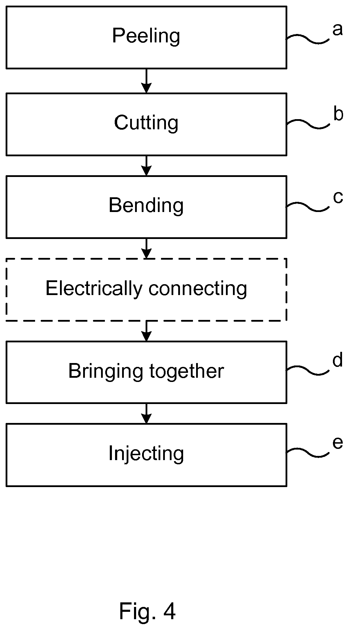

A method of assembling the hang-off device 3 with the armoured power cable 5 will now be described with reference to Fig. 4.

In case the first part 3a is a single piece structure which it not separable into two halves around an armoured power cable, the first part 3a is provided around the armoured power cable 5 before commencement of the steps presented below. In this case, the armoured power cable 5 is arranged to extend through the central through-opening of the first part 3a.

According to one variation, also the second part 3b is provided around the armoured power cable 5 in a similar manner as the first part 3a. In that case, the second part 3b is arranged between the first part 3a and that end of the armoured power cable which is to be installed at an offshore platform. A distance is left between the first part 3a and the second part 3b. It should be noted that alternatively the second part 3b could be provided around the armoured power cable at a later stage of assembly.

In case the first part 3a is separable into two halves with respect to the axis defined by the armoured power cable, the first part 3a may be provided around the armoured power cable at a later time, i.e. during step d).

In a step a) the portion 5c of the armoured power cable is peeled to expose the armour wires 5b. In particular, the external sheath 5a is peeled off. This portion 5c is located between the first part 3a and that end of the armoured power cable 5 which is to be installed at an offshore platform or structure in case the first part 3a has previously been provided around the armoured power cable 5.

In a step b) the armour wires 5b are cut along the periphery of the armoured power cable 5. The first set of cut armour wires 5d and the second set of cut armour wires 5e are thereby obtained.

In a step c) the first set of cut armour wires 5d and the second set of cut armour wires 5e are bent radially outwardly. A section of the armoured power cable 5 between and in the radial direction below the first set of cut armour wires 5d and the second set of cut armour wires 5e may thus be exposed. This may be advantageous if an electrically conducting means in the form of a structure such an electrically conducting ring is to be placed around the armoured power cable to provide an electrical connection between the mentioned two sets of cut armour wires 5d and 5e. The amount which the first set of cut armour wires 5d and the second set of cut armour wires 5e is bent outwardly depends on whether space needs to be cleared for placement of an electrically conducting structure such an electrically conducting ring. If the electrically conducting means is an electrically conducting compound for moulding, it may not be necessary to bend the wires the same amount as in the case of e.g. the electrically conducting ring.

In case an electrically conducting structure is placed in the section between the outwardly bent first set of cut armour wires 5d and second set of cut armour wires 5e, it may be necessary to bend these sets of cut armour wires inwards towards the electrically conducting structure to obtain an electrical connection. Furthermore, another step of the assembling process could be to weld the first set of cut armour wires 5d and the second set of armour wires 5e to the electrically conducting means. If the armoured power cable comprises several layers of armouring steps b)-c) may be repeated for each layers of armour wires prior to step d) described below in variations utilising an electrically conducting structure. Thus for example an electrically conducting ring may be provided between the first set of cut armour wires and the second set of cut armour wires of each layer of armour wires.

In a step d) the first part 3a is brought together with the second part 3b, and these parts are assembled together to form the hang-off device 3. The first part 3a and the second part 3b are brought together in a manner in which the first set of cut armour wires 5d and the second set of cut armour wires 5e are arranged within the hang-off device 3.

In variations where the electrical connection between the first set of cut armour wires 5d and the second set of cut armour wires 5e is obtained via the inner walls of the mould chamber 3d, this connection may be achieved in conjunction with assembling of the first part 3a with the second part 3b.

In a step e) a compound is injected into the mould chamber 3d to fixate the hang-off device 3 to the first set of cut armour wires 5d and the second set of armour wires 5e.

As previously mentioned, according to one variation the electrical connection between the first set of cut armour wires 5d and the second set of cut armour wires 5e may be obtained by means of an electrically conductive compound. Thus, for such a variation, the compound injected in step e) is an electrically conducting compound.

The hang-off arrangement 1 is typically assembled prior to pulling the armoured high voltage cable through a tube, e.g. a J-tube or an I-tube, of an offshore platform. The hang-off arrangement 1 is thus normally assembled prior to loading onto a vessel, or while on the vessel.

Fig. 5 shows the hang-off device 3 mounted onto an offshore platform such as an oil platform at the termination of a tube 11 such as a J-tube, extending through a platform deck 9. According to the example, the hang-off device 3 has been mounted to a flange 13 for example by engagement into a groove in the body of the first part 3a of hang-off device 3. Furthermore, as can be seen in Fig. 5, the armoured power cable has been pulled onto the platform by means of a pull-in head 15. Upon mounting of the hang-off device 3 onto the platform deck 9, the armour wires of the cable termination of the armoured power cable 5 is connected to ground at the platform. The armour of the armoured power cable 5 is hence grounded to the platform.

The hang-off devices and methods presented herein may find applications in the offshore industry, for example for attaching power cables to offshore platforms or vessels utilising tubes for leading the cable to the attachment point or without the utilisation of tubes. They could also be used for onshore applications at any installation where a power cable is attached to a structure.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of assembling a hang-off device (3) with an armoured power cable (5), wherein the method comprises:
a) peeling a portion (5c) of the armoured power cable (5) to expose armour wires (5b) of the armoured power cable (5),
b) cutting the armour wires (5b) along the periphery of the armoured power cable (5) thus obtaining a first set of cut armour wires (5d) and a second set of armour wires (5e), each cut armour wire of the first set of cut armour wires (5d) facing a corresponding cut armour wire of the second set of armour wires (5e),
c) bending the first set of cut armour wires (5d) and the second set of armour wires (5e) radially outwards,
d) bringing together and assembling a first part (3a) of the hang-off device (3) with a second part (3b) of the hang-off device around the armoured power cable thus forming the hang-off device (3), the first part (3a) and the second part (3b) being brought together such that the first set of cut armour wires (5d) and the second set of armour wires (5e) are arranged within the hang-off device (3), wherein a mould chamber (3d) is formed around the first set of cut armour wires (5d) and the second set of armour wires (5e),
e) injecting a compound into the mould chamber (3d) to fixate the hang-off device (3) to the outwardly bent first set of cut armour wires (5d) and second set of armour wires (5e), and
electrically connecting the first set of cut armour wires (5d) to the second set of cut armour wires (5e) after step c),
wherein the step of electrically connecting is obtained by providing an electrically conducting ring between the first set of cut armour wires (5d) and the second set of cut armour wires (5e) which have been bent radially outwards in step c), and arranging the first set of cut armour wires (5d) and the second set of cut armour wires (5e) in electrical connection with the electrically conducting ring prior to step d), and welding the first set of cut armour wires (5d) and the second set of cut armour wires (5e) to the electrically conducting ring, or
wherein the step of electrically connecting comprises arranging the first set of cut armour wires (5d) to contact the inner walls of the mould chamber (3d) to obtain electrical connection between the first set of cut armour wires (5d) and the second set of cut armour wires (5e), or
wherein the step of electrically connecting comprises injecting an electrically conducting compound in step e).

2. The method as claimed in claim 1, comprising repeating steps b)-c) for a plurality of layers of armour wires (5b) of the armoured power cable (5) prior to step d), and providing an electrically conducting ring between the first set of cut armour wires (5d) and the second set of cut armour wires (5e) of each layer of armour wires (5b).

3. The method as claimed in claim 1, comprising welding the first set of cut armour wires (5d) and the second set of cut armour wires (5e) to the inner walls of the mould chamber (3d).

4. The method as claimed in any of the preceding claims, wherein each armour wire of the first set of cut armour wires (5d) is electrically connected to an armour wire of the second set of cut armour wires (5e).

5. A hang-off device (3) for assembly with an armoured power cable (5) having a first set of cut armour wires (5d) and a second set of cut armour wires (5e), wherein the hang-off device (3) comprises:
a first part (3a) and a second part (3b) adapted to be assembled together, each of the first part (3a) and the second part (3b) being arranged to receive an armoured power cable (5), the first part (3a) and the second part (3b) defining a mould chamber (3d) for moulding a first set of cut armour wires (5d) and a second set of cut armour wires (5e) to the hang-off device (3), and
electrically conducting means arranged to provide an electrical connection between a first set of cut armour wires (5d) and a second set of cut armour wires (5e) when arranged in the mould chamber (3d),
wherein the electrically conducting means is an electrically conducting compound for moulding a first set of cut armour wires (5d) and a second set of armour wires (5e) into the hang-off device (3), or
wherein the electrically conducting means is an electrically conducting ring arranged to be mounted between a first set of cut armour wires (5d) and a second set of cut armour wires (5e) within the mould chamber (3d), or
wherein the electrically conducting means is the inner walls of the mould chamber (3d).

6. The hang-off device (3) as claimed in claim 5, wherein each of the first part (3a) and the second part (3b) comprises a through-opening (3c) extending from an external surface into the mould chamber (3d).

7. A hang-off arrangement (1) comprising:
a hang-off device (3) as claimed in claim 5 or 6, and
an armoured power cable (5) having a first set of cut armour wires (5d) and a second set of cut armour wires (5e) moulded into the mould chamber (3d) of the hang-off device (3), and arranged in electrical connection via the electrically conducting means.

## Patentansprüche

1. Verfahren zur Montage einer herunterhängenden Vorrichtung (3) mit einem gepanzerten Stromkabel (5), das Verfahren umfassend:
a) Schälen eines Abschnitts (5c) des gepanzerten Stromkabels (5), um die Armierungsdrähte (5b) des gepanzerten Stromkabels (5) freizulegen,
b) Schneiden der Armierungsdrähte (5b) entlang des Umfangs des gepanzerten Stromkabels (5), wodurch ein erster Satz geschnittener Armierungsdrähte (5d) und ein zweiter Satz Armierungsdrähte (5e) erhalten wird, wobei jeder geschnittene Armierungsdraht des ersten Satzes geschnittener Armierungsdrähte (5d) einem entsprechenden geschnittenen Armierungsdraht des zweiten Satzes Armierungsdrähte (5e) gegenüberliegt,
c) Biegen des ersten Satzes geschnittener Armierungsdrähte (5d) und des zweiten Satzes Armierungsdrähte (5e) radial nach außen,
d) Zusammenbringen und Montage eines ersten Teils (3a) der herunterhängenden Vorrichtung (3) mit einem zweiten Teil (3b) der herunterhängenden Vorrichtung um das gepanzerte Stromkabel herum, wodurch die herunterhängende Vorrichtung (3) gebildet wird, wobei der erste Teil (3a) und der zweite Teil (3b) so zusammengebracht werden, dass der erste Satz von geschnittenen Armierungsdrähten (5d) und der zweite Satz von Armierungsdrähten (5e) innerhalb der herunterhängenden Vorrichtung (3) angeordnet sind, wobei eine Formkammer (3d) um den ersten Satz von geschnittenen Armierungsdrähten (5d) und den zweiten Satz von Armierungsdrähten (5e) gebildet wird,
e) Einspritzen einer Verbindung in die Formkammer (3d), um die herunterhängende Vorrichtung (3) an dem nach außen gebogenen ersten Satz von geschnittenen Armierungsdrähten (5d) und dem zweiten Satz von Armierungsdrähten (5e) zu befestigen, und
elektrisches Verbinden des ersten Satzes geschnittener Armierungsdrähte (5d) mit dem zweiten Satz geschnittener Armierungsdrähte (5e) nach Schritt c),
wobei der Schritt des elektrischen Verbindens durch Bereitstellen eines elektrisch leitenden Rings zwischen dem ersten Satz von geschnittenen Armierungsdrähten (5d) und dem zweiten Satz von geschnittenen Armierungsdrähten (5e), die in Schritt c) radial nach außen gebogen wurden, erhalten wird, und Anordnen des ersten Satzes von geschnittenen Armierungsdrähten (5d) und des zweiten Satzes von geschnittenen Armierungsdrähten (5e) in elektrischer Verbindung mit dem elektrisch leitenden Ring vor Schritt d) und Verschweißen des ersten Satzes von geschnittenen Armierungsdrähten (5d) und des zweiten Satzes von geschnittenen Armierungsdrähten (5e) mit dem elektrisch leitenden Ring, oder
wobei der Schritt des elektrischen Verbindens das Anordnen des ersten Satzes geschnittener Armierungsdrähte (5d) zum Kontaktieren der Innenwände der Formkammer (3d) umfasst, um eine elektrische Verbindung zwischen dem ersten Satz geschnittener Armierungsdrähte (5d) und dem zweiten Satz geschnittener Armierungsdrähte (5e) zu erhalten, oder wobei der Schritt des elektrischen Verbindens das Einspritzen einer elektrisch leitenden Verbindung in Schritt e) umfasst.

2. Verfahren nach Anspruch 1, umfassend das Wiederholen der Schritte b) -c) für eine Vielzahl von Lagen von Armierungsdrähten (5b) des gepanzerten Stromkabels (5) vor Schritt d) und das Bereitstellen eines elektrisch leitenden Rings zwischen dem ersten Satz von geschnittenen Armierungsdrähten (5d) und dem zweiten Satz von geschnittenen Armierungsdrähten (5e) jeder Lage von Armierungsdrähten (5b).

3. Verfahren nach Anspruch 1, umfassend das Schweißen des ersten Satzes geschnittener Armierungsdrähte (5d) und des zweiten Satzes geschnittener Armierungsdrähte (5e) an die Innenwände der Formkammer (3d).

4. Verfahren nach einem der vorhergehenden Ansprüche, wobei jeder Armierungsdraht des ersten Satzes geschnittener Armierungsdrähte (5d) mit einem Armierungsdraht des zweiten Satzes geschnittener Armierungsdrähte (5e) elektrisch verbunden ist.

5. Herunterhängende Vorrichtung (3) zur Montage mit einem gepanzerten Stromkabel (5), das einen ersten Satz von geschnittenen Armierungsdrähten (5d) und einen zweiten Satz von geschnittenen Armierungsdrähten (5e) aufweist, wobei die herunterhängende Vorrichtung (3) umfasst:
einen ersten Teil (3a) und einen zweiten Teil (3b), die dazu geeignet sind, montiert zu werden, wobei sowohl das erste Teil (3a) als auch das zweite Teil (3b) so angeordnet sind, dass sie ein gepanzertes Stromkabel (5) aufnehmen können, wobei das erste Teil (3a) und das zweite Teil (3b) eine Formkammer (3d) zum Formen eines ersten Satzes von geschnittenen Armierungsdrähten (5d) und eines zweiten Satzes von geschnittenen Armierungsdrähten (5e) an die herunterhängende Vorrichtung (3) definieren, und
elektrisch leitende Mittel, die so angeordnet sind, dass sie eine elektrische Verbindung zwischen einem ersten Satz geschnittener Armierungsdrähte (5d) und einem zweiten Satz geschnittener Armierungsdrähte (5e) bereitstellen, wenn sie in der Formkammer (3d) angeordnet sind,
wobei das elektrisch leitende Mittel eine elektrisch leitende Verbindung zum Formen eines ersten Satzes von geschnittenen Armierungsdrähten (5d) und eines zweiten Satzes von Armierungsdrähten (5e) in die herunterhängende Vorrichtung (3) ist, oder
wobei das elektrisch leitende Mittel ein elektrisch leitender Ring ist, der so angeordnet ist, dass er zwischen einem ersten Satz geschnittener Armierungsdrähte (5d) und einem zweiten Satz geschnittener Armierungsdrähte (5e) innerhalb der Formkammer (3d) angebracht werden kann, oder
wobei das elektrisch leitende Mittel die Innenwände der Formkammer (3d) sind.

6. Herunterhängende Vorrichtung (3) nach Anspruch 5, wobei sowohl der erste Teil (3a) als auch der zweite Teil (3b) eine Durchgangsöffnung (3c) umfasst, die sich von einer Außenfläche in die Formkammer (3d) erstreckt.

7. Herunterhängende Anordnung (1), umfassend:
eine herunterhängende Vorrichtung (3) nach Anspruch 5 oder 6, und
ein gepanzertes Stromkabel (5) mit einem ersten Satz geschnittener Armierungsdrähte (5d) und einem zweiten Satz geschnittener Armierungsdrähte (5e), die in die Formkammer (3d) der herunterhängenden Vorrichtung (3) eingegossen und über die elektrisch leitenden Mittel in elektrischer Verbindung angeordnet sind.

## Revendications

1. Procédé d'assemblage d'un dispositif de suspension (3) avec un câble d'alimentation blindé (5), dans lequel le procédé comprend :
a) le pelage d'une portion (5c) du câble d'alimentation blindé (5) pour exposer des fils de blindage (5b) du câble d'alimentation blindé (5),
b) le découpage des fils de blindage (5b) le long de la périphérie du câble d'alimentation blindé (5) en obtenant de ce fait un premier ensemble de fils de blindage (5d) coupés et un deuxième ensemble de fils de blindage (5e), chaque fil de blindage coupé du premier ensemble de fils de blindage (5d) coupés faisant face à un fil de blindage coupé correspondant du deuxième ensemble de fils de blindage (5e),
c) le pliage du premier ensemble de fils de blindage (5d) coupés et du deuxième ensemble de fils de blindage (5e) radialement vers l'extérieur,
d) le rapprochement et l'assemblage d'une première partie (3a) du dispositif de suspension (3) avec une deuxième partie (3b) du dispositif de suspension autour du câble d'alimentation blindé en formant de ce fait le dispositif de suspension (3), la première partie (3a) et la deuxième partie (3b) étant rapprochées de sorte que le premier ensemble de fils de blindage (5d) coupés et le deuxième ensemble de fils de blindage (5e) soient agencés à l'intérieur du dispositif de suspension (3), dans lequel une chambre de moulage (3d) est formée autour du premier ensemble de fils de blindage (5d) coupés et du deuxième ensemble de fils de blindage (5e),
e) l'injection d'un composé dans la chambre de moulage (3d) pour fixer le dispositif de suspension (3) au premier ensemble de fils de blindage (5d) coupés et au deuxième ensemble de fils de blindage (5e) pliés vers l'extérieur, et
le raccordement électrique du premier ensemble de fils de blindage (5d) coupés au deuxième ensemble de fils de blindage (5e) coupés après l'étape c),
dans lequel l'étape du raccordement électrique est obtenue en fournissant un anneau électriquement conducteur entre le premier ensemble de fils de blindage (5d) coupés et le deuxième ensemble de fils de blindage (5e) coupés qui ont été pliés radialement vers l'extérieur à l'étape c), et l'agencement du premier ensemble de fils de blindage (5d) coupés et du deuxième ensemble de fils de blindage (5e) coupés en raccordement électrique avec l'anneau électriquement conducteur avant l'étape d), et le soudage du premier ensemble de fils de blindage (5d) coupés et du deuxième ensemble de fils de blindage (5e) coupés à l'anneau électriquement conducteur, ou
dans lequel l'étape du raccordement électrique comprend l'agencement du premier ensemble de fils de blindage (5d) coupés pour être en contact avec les parois intérieures de la chambre de moulage (3d) pour obtenir un raccordement électrique entre le premier ensemble de fils de blindage (5d) coupés et le deuxième ensemble de fils de blindage (5e) coupés, ou
dans lequel l'étape du raccordement électrique comprend l'injection d'un composé électriquement conducteur à l'étape e) .

2. Procédé selon la revendication 1, comprenant la répétition des étapes b) et c) pour une pluralité de couches de fils de blindage (5b) du câble d'alimentation blindé (5) avant l'étape d), et la fourniture d'un anneau électriquement conducteur entre le premier ensemble de fils de blindage (5d) coupés et le deuxième ensemble de fils de blindage (5e) coupés de chaque couche de fils de blindage (5b).

3. Procédé selon la revendication 1, comprenant le soudage du premier ensemble de fils de blindage (5d) coupés et du deuxième ensemble de fils de blindage (5e) coupés sur les parois intérieures de la chambre de moulage (3d) .

4. Procédé selon l'une quelconque des revendications précédentes, dans lequel chaque fil de blindage du premier ensemble de fils de blindage (5d) coupés est raccordé électriquement à un fil de blindage du deuxième ensemble de fils de blindage (5e) coupés.

5. Dispositif de suspension (3) pour un assemblage avec un câble d'alimentation blindé (5) ayant un premier ensemble de fils de blindage (5d) coupés et un deuxième ensemble de fils de blindage (5e) coupés, dans lequel le dispositif de suspension (3) comprend :
une première partie (3a) et une deuxième partie (3b) aptes à être assemblées l'une avec l'autre, chacune de la première partie (3a) et de la deuxième partie (3b) étant agencée pour recevoir un câble d'alimentation blindé (5), la première partie (3a) et la deuxième partie (3b) définissant une chambre de moulage (3d) pour mouler un premier ensemble de fils de blindage (5d) coupés et un deuxième ensemble de fils de blindage (5e) coupés sur le dispositif de suspension (3), et
un moyen électriquement conducteur agencé pour fournir un raccordement électrique entre une premier ensemble de fils de blindage (5d) coupés et un deuxième ensemble de fils de blindage (5e) coupés lorsqu'ils sont agencés dans la chambre de moulage (3d),
dans lequel le moyen électriquement conducteur est un composé électriquement conducteur pour mouler un premier ensemble de fils de blindage (5d) coupés et un deuxième ensemble de fils de blindage (5e) coupés dans le dispositif de suspension (3), ou
dans lequel le moyen électriquement conducteur est un anneau électriquement conducteur agencé pour être monté entre un premier ensemble de fils de blindage (5d) coupés et un deuxième ensemble de fils de blindage (5e) coupés à l'intérieur de la chambre de moulage (3d), ou
dans lequel le moyen électriquement conducteur est les parois intérieures de la chambre de moulage (3d).

6. Dispositif de suspension (3) selon la revendication 5, dans lequel chacune de la première partie (3a) et de la deuxième partie (3b) comprend une ouverture traversante (3c) s'étendant depuis une surface externe dans la chambre de moulage (3d).

7. Agencement de suspension (1) comprenant :
un dispositif de suspension (3) selon la revendication 5 ou 6, et
un câble d'alimentation blindé (5) ayant un premier ensemble de fils de blindage (5d) coupés et un deuxième ensemble de fils de blindage (5e) coupés moulés dans la chambre de moulage (3d) du dispositif de suspension (3), et agencés en raccordement électrique via le moyen électriquement conducteur.
